# EUROPEAN PATENT SPECIFICATION

(11) **EP 1 104 848 B1**
(45) Date of publication and mention of the grant of the patent: **14.07.2004**
(21) Application number: 00126289.8
(22) Date of filing: 01.12.2000
(51) Int. Cl.: F02M 21/04

(54) **Air/fuel mixing device for a gaseous fuel internal combustion engine**
Luft-Brennstoffmischvorrichtung für Brennkraftmaschine mit gasförmigem Brennstoff
Mélangeur air-carburant pour moteur à combustion interne à gaz

(30) Priority: 03.12.1999 IT TO991070
(43) Date of publication of application: 06.06.2001
(73) Proprietor: Iveco Motorenforschung AG, CH-9320 Arbon (CH)
(72) Inventor: Papst, Fritz, 8590 Romanshorn (CH)
(74) Representative: Gervasi, Gemma, Dr.

(56) References cited:
- US-A- 5 408 978
- "BELOW THROTTLE INJECTION SYSTEM FOR COMPRESSED NATURAL GAS" RESEARCH DISCLOSURE, no. 755, 1 November 1997 (1997-11-01), page 40304 XP000726671

## Description

The present invention relates to an air/fuel mixing device for a gaseous fuel internal combustion engine.

For years, one of the main objectives in the automotive industry has been to minimize pollutant engine emissions. And, particularly in the industrial vehicle sector, internal combustion engines have been devised which employ gaseous fuels, such as natural gas, methane, LPG and similar fuels.

Gaseous fuel internal combustion engines are known which are supplied by means of multipoint injection (MPI) systems, i.e. whereby fuel is injected into each cylinder. To work effectively, however, MPI systems call for injectors with a sufficient flow capacity and air intake ports to the cylinders capable of supplying the same amount of air in each cylinder. Both of which characteristics are difficult to achieve, particularly in the case of high-power gas engines.

As a result, so-called single-point (SPI) solutions have been proposed, whereby fuel is injected, upstream from the cylinders, into a mixing device common to all the cylinders. For the engine to function properly, the mixing device must be designed to provide as homogeneous a mixture as possible, while at the same time permitting effective control of the mixture. What is more, the above functional requirements must be achieved by means of a mixing device which is cheap and easy to produce and assemble.

An air/fuel mixing device for gaseous fuel wherein the fuel is fed to the mixing chamber via an annular groove is known from US 5 408 378 A.

It is an object of the present invention to provide an air/fuel mixing device for a gaseous fuel internal combustion engine, designed to meet the aforementioned requirements.

According to the present invention, there is provided an air/fuel mixing device for a gaseous fuel internal combustion engine, comprising a main body defining a mixing chamber connected in series with an intake manifold of the engine; and supply means for feeding a gaseous fuel into said mixing chamber; the device being characterized in that said supply means comprise an annular supply chamber coaxial with said mixing chamber and connected to a supply system for supplying said gaseous fuel; and a number of electronically controlled injectors arranged about said mixing chamber and having respective inlet fittings communicating with said supply chamber, and respective outlet nozzles communicating with said mixing chamber.

A non-limiting embodiment of the present invention will be described by way of example with reference to the accompanying drawings, in which:
Figure 1 shows a cross section of a preferred embodiment of the mixing device according to the invention;
Figure 2 shows a partial plan view of the Figure 1 device, partly sectioned along line II-II;
Figure 3 shows a larger-scale section along line III-III in Figure 2.

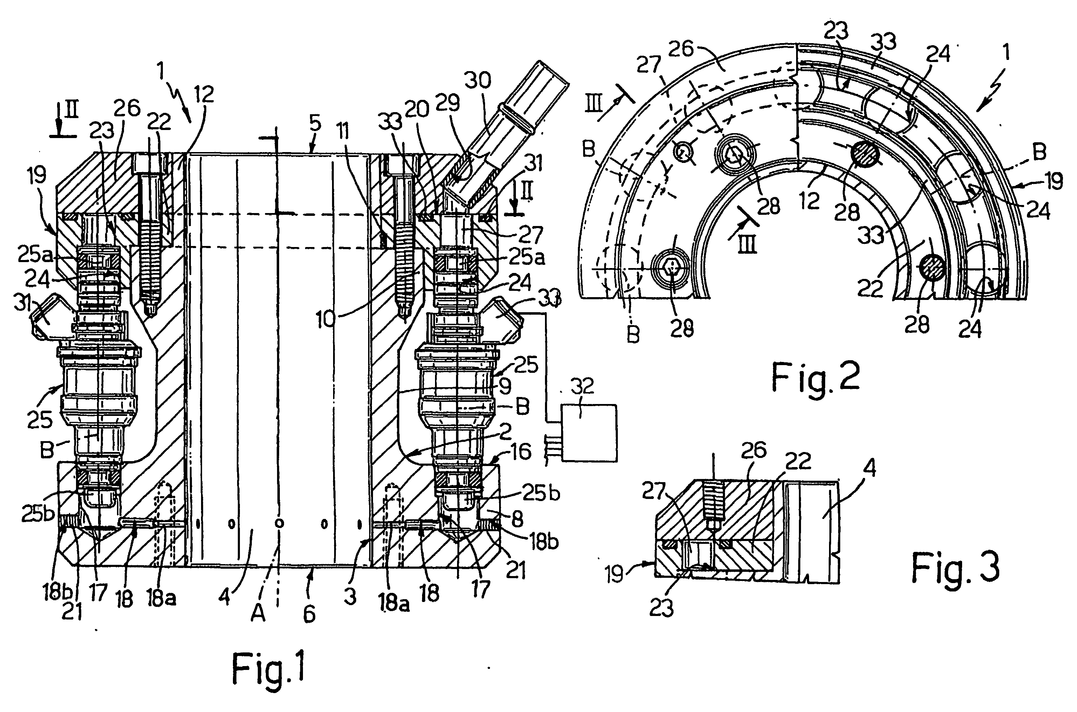

Number 1 in Figure 1 indicates as a whole an air/fuel mixing device for a gaseous fuel, e.g. natural gas, internal combustion engine of an industrial vehicle, e.g. a bus. Device 1 is mounted between a throttle body for regulating air flow, and an intake manifold of the engine (both known and not shown).

Device 1 comprises a tubular main body 2 having an axial cavity 4 defined by a cylindrical inner wall 3, of axis A, of body 2; and cavity 4 comprises an inlet 5 positioned, in use, facing the throttle body, and an outlet 6 positioned, in use, facing the intake manifold of the engine.

Tubular body 2 comprises a tubular inlet portion 12 with a small outside diameter and defining inlet 5; an intermediate portion 9 having an annular projection 10 defined, towards portion 12, by a radial surface 11; and an annular flange 8 at the opposite axial end of tubular body 2 to portion 12.

More specifically, annular flange 8 has a radial surface 16 facing intermediate portion 9, and in which are formed a number of, e.g. twelve, equally spaced, axial dead holes 17 having respective axes B parallel to axis A; and each hole 17 communicates with cavity 4 via a respective radial hole 18 formed in flange 8 close to the bottom of respective hole 17.

Each of holes 18, which are through holes, comprises a small-diameter, calibrated end portion 18a adjacent to cavity 4; and an opposite end portion 18b located radially outwards of hole 17 and plugged in gastight manner by a grub-screw 21.

Device 1 also comprises an annular body 19 fitted around tubular body 2 and having an inner radial flange 22 which rests axially on radial surface 11 of projection 10 of body 2. Annular body 19 also has an annular, square-section groove 23 formed in its end surface 20 facing inlet 5, and a number of axial holes 24, which are formed in an opposite end surface facing flange 8, communicate with annular groove 23, and are coaxial with and face holes 17 in flange 8.

Device 1 also comprises a number of known electronically controlled injectors 25 (not described in detail) equally spaced about main body 2 with their respective axes parallel to axis A, and each of which has an inlet fitting 25a housed in gastight manner inside a respective hole 24 in annular body 19, and an outlet nozzle 25b housed in gastight manner inside a respective hole 17. Injectors 25 have respective electric connectors 31 for connection to an electronic central control unit 32 for opening injectors 25 in predetermined sequences and for durations depending on the load conditions of the engine.

Finally, device 1 comprises a closing ring 26 fitted to tubular portion 12 of body 2 and resting axially on surface 20 of annular body 19, so as to axially close annular groove 23 (Figure 3) and define, with annular groove 23, a chamber 27 coaxial with cavity 4 and for supplying injectors 25. Chamber 27 is sealed by two sealing rings 31 interposed between ring 26 and surface 20, respectively inwards and outwards of groove 23; ring 26 has a hole 29 communicating with chamber 27 and housing in gastight manner a fitting 30 for connection to a gas supply line (not shown); and ring 26 and annular body 19 are tightened together to annular projection 10 of tubular body 2 by a number of screws 28.

In actual use, air flow through cavity 4, which defines a mixing chamber of device 1, is regulated by the throttle body (not shown) in response to operation of the vehicle accelerator pedal.

Fuel is fed into cavity 4 by injectors 25. Conveniently, pairs of diametrically opposite injectors are activated sequentially, at time intervals equal to the cycle time (two turns of the drive shaft) divided by the number of pairs of injectors. In the example shown, in which injectors 25 are twelve in number, the pairs of injectors are activated at intervals corresponding to 120° rotation of the drive shaft. The open time is regulated by central control unit 32 on the basis of engine load.

The gaseous fuel fed into chamber 27 is therefore fed cyclically by pairs of opposite injectors into cavity 4 through holes 17, 18, and is mixed effectively with air.

The advantages of device 1 according to the present invention will be clear from the foregoing description.

In particular, while effectively controlling supply and providing for a good air/fuel mixture, device 1 is extremely cheap and easy to produce and assemble.

Clearly, changes may be made to the mixing device as described herein without, however, departing from the scope of the accompanying Claims.

## Claims

1. An air/fuel mixing device (1) for a gaseous fuel internal combustion engine, comprising a main body defining a mixing chamber (4) connected in series with an intake manifold of the engine; and supply means (30, 27, 25, 17, 28) for feeding a gaseous fuel into said mixing chamber (4); the device (1) being **characterized in that** said supply means (30, 27, 25, 17, 28) comprise an annular supply chamber (27) coaxial with said mixing chamber (4) and connected to a supply system for supplying said gaseous fuel; and a number of electronically controlled injectors (25) arranged about said mixing chamber (4) and having respective inlet fittings (25a) communicating with said supply chamber (27), and respective outlet nozzles (25b) communicating with said mixing chamber (4).

2. A device as claimed in Claim 1, **characterized in that** said injectors (25) are positioned with respective axes (B) parallel to an axis (A) of said mixing chamber (4).

3. A device as claimed in Claim 2, **characterized by** comprising at least one annular body (19) coaxial with said main body (2) and defining at least part (23) of said supply chamber (27); said injectors (25) being mounted between said annular body (19) and an annular flange (8) of said main body (2).

4. A device as claimed in Claim 3, **characterized in that** said annular body (19) has a number of axial holes (24) communicating with said supply chamber (27) and housing in gastight manner said inlet fittings (25a) of said injectors (25); said flange (8) of said main body (2) having a number of axial holes (17) communicating with said mixing chamber (4) and housing in gastight manner said outlet nozzles (25b) of said injectors (25).

5. A device as claimed in Claim 4, **characterized in that** said flange (8) has a number of radial holes (18) connecting respective said axial holes (17) of said flange (8) to said mixing chamber (4).

6. A device as claimed in one of Claims 3 to 5, **characterized by** comprising a closing ring (26) coaxial with said main body (2) and resting axially on said annular body (19); said supply chamber (27) being defined by said closing ring (26) and by an annular face groove (23) of said annular body (19).

## Patentansprüche

1. Luft-Brennstoffmischvorrichtung (1) für eine Brennkraftmaschine mit gasförmigem Brennstoff, umfassend einen Hauptkörper, der eine Mischkammer (4) definiert, die in Reihe mit dem Saugrohr der Maschine verbunden ist; ein Versorgungsmittel (30, 27, 25, 17, 28), um der genannten Mischkammer (4) einen gasförmigen Brennstoff zuzuführen; wobei die Vorrichtung (1) **dadurch gekennzeichnet ist, dass** das genannte Versorgungsmittel (30, 27, 25, 17, 28) eine koaxial mit der genannten Mischkammer (4) angeordnete ringförmige Versorgungskammer (27) umfasst, die mit einem Versorgungssystem zur Zufuhr des genannten gasförmigen Brennstoffs verbunden ist; und eine Anzahl von elektronisch gesteuerten Injektoren (25), die um die genannte Mischkammer (4) angeordnet sind und jeweils mit der genannten Versorgungskammer (27) verbundene Eintrittsanschlussstutzen (25a) und jeweils mit der genannten Mischkammer (4) verbundene Austrittsdüsen (25b) aufweisen.

2. Vorrichtung gemäß Anspruch 1, **dadurch gekennzeichnet, dass** die genannten Injektoren (25) nach jeweiligen Achsen (B) ausgerichtet sind, die parallel zu einer Achse (A) der genannten Mischkammer (4) verlaufen.

3. Vorrichtung gemäß Anspruch 2, **dadurch gekennzeichnet, dass** sie wenigstens einen koaxial mit dem genannten Hauptkörper (2) angeordneten ringförmigen Körper (19) aufweist, der wenigstens einen Teil (23) der genannten Versorgungskammer (27) definiert; wobei die genannten Injektoren (25) zwischen dem genannten ringförmigen Körper (19) und einem ringförmigen Flansch (8) des genannten Hauptkörpers (2) montiert sind.

4. Vorrichtung gemäß Anspruch 3, **dadurch gekennzeichnet, dass** der genannte ringförmige Körper (19) eine Anzahl von axialen Löchern (24) aufweist, die mit der genannten Versorgungskammer (27) verbunden sind und die genannten Eintrittsanschlussstutzen (25a) der genannten injektoren (25) gasdicht aufnehmen; wobei der genannte Flansch (8) des genannten Hauptkörpers (2) eine Anzahl von axialen Löchern (17) aufweist, die mit der genannten Mischkammer (4) verbunden sind und die genannten Austrittsdüsen (25b) der genannten Injektoren (25) gasdicht aufnehmen.

5. Vorrichtung gemäß Anspruch 4, **dadurch gekennzeichnet, dass** der genannte Flansch (8) eine Anzahl von radialen Löchern (18) aufweist, die jeweils die genannten axialen Löcher (17) des genannten Flansches (8) mit der genannten Mischkammer (4) verbinden.

6. Vorrichtung gemäß einem der Ansprüche 3 bis 5, **dadurch gekennzeichnet, dass** sie eine Schließring (26) umfasst, der koaxial mit dem genannten Hauptkörper (2) angeordnet ist und axial auf dem genannten ringförmigen Körper (19) aufliegt; wobei die genannten Versorgungskammer (27) durch den genannten Schließring (26) und durch eine ringförmige Rille (23) in der Seitenfläche des genannten ringförmigen Körpers (19) definiert ist.

## Revendications

1. Dispositif de mélange air/combustible (1) pour un moteur à combustion interne à combustible gazeux, comprenant un corps principal définissant une chambre de mélange (4) montée en série avec un collecteur d'admission du moteur; et des moyens d'alimentation (30, 27, 25, 17, 28) pour amener un combustible gazeux dans ladite chambre de mélange (4); le dispositif (1) étant **caractérisé en ce que** lesdits moyens d'alimentation (30, 27, 25, 17, 28) comprennent une chambre d'alimentation annulaire (27) coaxiale à ladite chambre de mélange (4) et reliée à un système d'alimentation pour amener ledit combustible gazeux; et un nombre d'injecteurs (25) commandés d'une manière électronique, agencés autour de ladite chambre de mélange (4) et présentant des raccords d'entrée respectifs (25a) communiquant avec ladite chambre d'alimentation (27), et des buses de sortie respectives (25b) communiquant avec ladite chambre de mélange (4).

2. Dispositif selon la revendication 1, **caractérisé en ce que** lesdits injecteurs (25) sont positionnés avec des axes respectifs (B) parallèlement à un axe (A) de ladite chambre de mélange(4).

3. Dispositif selon la revendication 2, **caractérisé en ce qu'**il comprend au moins un corps annulaire (19) coaxial au corps principal (2) et définissant au moins une partie (23) de ladite chambre d'alimentation (27); lesdits injecteurs (25) étant installés entre ledit corps annulaire (19) et une bride annulaire (8) dudit corps principal (2).

4. Dispositif selon la revendication 3, **caractérisé en ce que** ledit corps annulaire (19) présente un nombre de trous axiaux (24) communiquant avec ladite chambre d'alimentation (27) et logeant d'une manière étanche aux gaz lesdits raccords d'entrée (25a) desdits injecteurs (25); ladite bride (8) dudit corps principal (2) présentant un nombre de trous axiaux (17) communiquant avec ladite chambre de mélange (4) et logeant d'une manière étanche aux gaz lesdites buses de sortie (25b) desdits injecteurs (25).

5. Dispositif selon la revendication 4, **caractérisé en ce que** ladite bride (8) présente un nombre de trous radiaux (18) reliant lesdits trous axiaux respectifs (17) de ladite bride (8) à ladite chambre de mélange (4).

6. Dispositif selon l'une des revendications 3 à 5, **caractérisé en ce qu'**il comprend une bague de fermeture (26) coaxiale audit corps principal (2) et reposant axialement sur ledit corps annulaire (19); ladite chambre d'alimentation (27) étant définie par ladite bague de fermeture (26) et par une rainure de face annulaire (23) dudit corps annulaire (19).
